# EUROPEAN PATENT APPLICATION

(11) **EP 1 209 405 A2**
(43) Date of publication of application: **29.05.2002**
(21) Application number: 01500229.8
(22) Date of filing: 13.09.2001
(51) Int. Cl.: F16L 37/127

(54) **Locking device for hose connectors**

(30) Priority: 22.11.2000 ES 200002857 U
(71) Applicant: V-90 Garciplastic, S.L., 28864 Ajalvir (Madrid) (ES)
(72) Inventor: Moran, Manuel Garcia, 28864 Alalvir (Madrid) (ES)
(74) Representative: Perez Bonal, Bernardo

(57) **Abstract**

Locking device for low-pressure hose connectors which allows to connect and join hose segments, comprising a connector piece (1) which is provided on its end section (2) with a notch (3) on which catches the claw (4) which is on the end of an elongated part (5), which in turn is provided with a longitudinal rib (6). On the side opposite the connector piece (1) is provided an obliquely slit collar (8) with flanges for jointing to the part (5). Internally the collar (8) has a number of evenly spaced gripping ribs.

## Description

### OBJECT OF THE INVENTION

The present invention relates to a locking device for hose connectors from among fast locking devices for hose connections.

The invention is characterised by a special construction of the device, which incorporates on the flange which is self-inserted in the connection a wavy notch on which catches an end claw of a ribbed hook, while on the opposite side, that of the hose, it has a flanged collar, sectioned and oblique, which incorporates inner ribs along its generatrix lines.

### BACKGROUND OF THE INVENTION

Fast connection means for hoses and in general for low pressure ducts are widely known and used, among which stand out the "fireman's hose" connector type and "luggage lock" connectors, which consist of hinged claws with rods which tense the lock when the hinge retracts and after the claw locks in place.

The applicant is not aware of the existence of locking means for hose connectors with the constructive characteristics here disclosed.

### DESCRIPTION OF THE INVENTION

The invention object of the present description is a locking device for hose connectors from among the various devices provided for fast locking of low pressure ducts, and more specifically for connecting the ends of hoses.

The invention is characterised by a special construction of the various elements which form the device, which incorporates a wavy notch on the side of the connection part, specifically on the end flange of said part, preferably made from a plastic material such as polypropylene, as well as the flange being self-inserted on this notch.

This notch of the flange is used for catching of a claw on the end of an elongated hook-shaped part in the form of a plate with a central reinforcement rib.

On the opposite side of the connection, which corresponds to the free end of the hose, the device has an open collar where the opposite end of the hook is conventionally hinged between two extensions which act as flanges. This open and obliquely slit collar incorporates a number of evenly spaced inner ribs along the line of its generatrix, which allow the collar to grip the hose preventing its torsion and the resulting rotation of the claw around the antagonist flange on which it catches.

### DESCRIPTION OF THE DRAWINGS

The present memory is accompanied by a set of drawings of a preferred example of the invention provided for purposes of illustration only and in a non-limiting way.

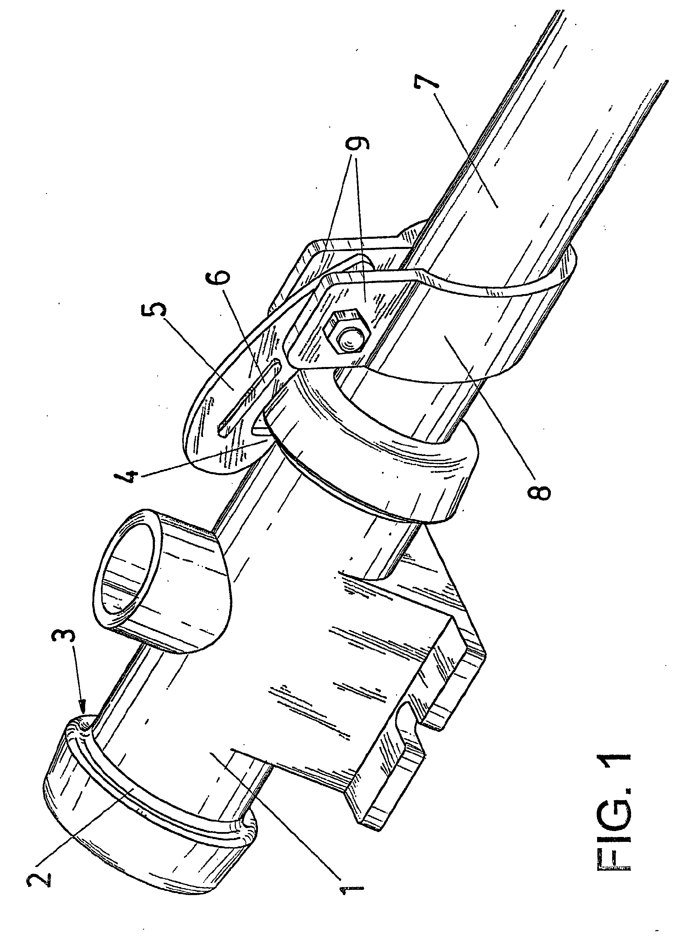

Figure 1 shows an exploded view of the end of the hose and the rest of the device with a connection piece which includes a smaller section perpendicular derivation.

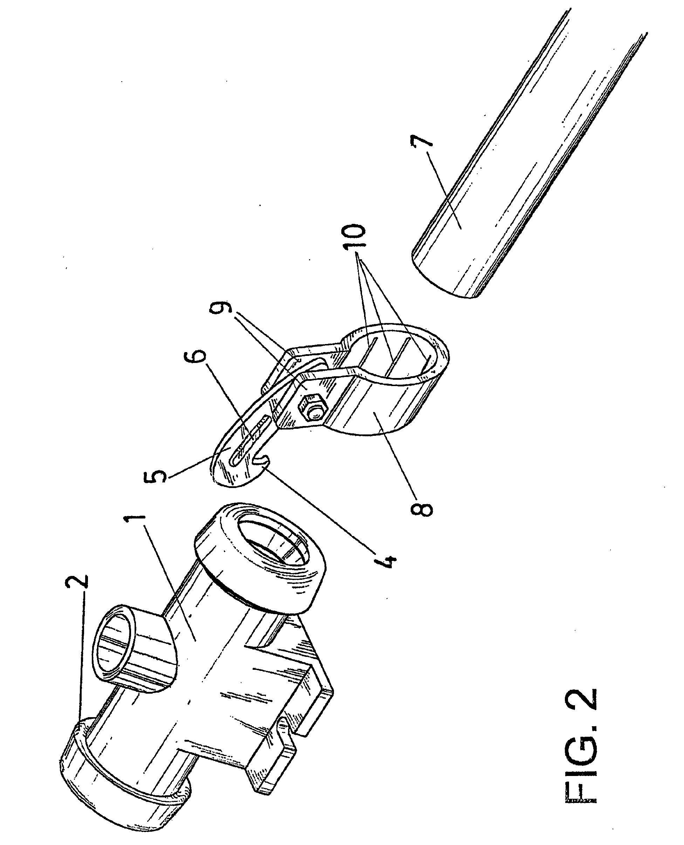

Figure 2 shows the same device of the preferred example applied to the connection of the previous derivation after its assembly.

### PREFERRED EMBODIMENT OF THE INVENTION

In view of the above, the present invention relates to a locking device for hose connectors from among the various devices for fast locking of hose connections, characterised in that it incorporates on the connection piece (1), preferably made of plastic, on the self-inserted end flange (2) a wavy notch (3) on which catches a claw (4) on the end of an elongated piece (5) provided with a longitudinal reinforcement rib (6).

On the side opposite the connection piece (1) the hose (7) incorporates an obliquely slit collar (8) with flanges (9) for jointing of piece (5), a number of internal evenly spaced ribs (10) for grip, placed along the line of the generatrix.

The essence of the invention is not changed by variations in the materials, shape, size and arrangements of the components, which are described in a non-limiting way which should allow its reproduction by an expert.

## Claims

1. Locking device for hose connectors, from among the various devices for fast locking of hose connections, **characterised in that** it incorporates on the connection piece (1), preferably made of plastic, on the self-inserted end flange (2) a wavy notch (3) on which catches a claw (4) on the end of an elongated piece (5) provided with a longitudinal reinforcement rib (6), while on the side opposite the connection piece (1) the hose (7) incorporates an obliquely slit collar (8) with flanges (9) for jointing of piece (5), and a number of internal evenly spaced ribs (10) for grip, placed along the line of the generatrix.
